# EUROPÄISCHE PATENTANMELDUNG

(11) **EP 2 584 685 A1**
(43) Veröffentlichungstag der Anmeldung: **24.04.2013**
(21) Anmeldenummer: 11185972.4
(22) Anmeldetag: 20.10.2011
(51) Int. Cl.: H02M 1/32, H02J 7/34, H02J 7/00

(54) **Symmetrierungsschaltung für in Reihe geschalteten Zwischenkreiskondensatoren, und Verfahren zu deren Betrieb**

(71) Anmelder: Siemens Aktiengesellschaft, 80333 München (DE)
(72) Erfinder: Donat, Albrecht, 91462 Dachsbach (DE)

(57) **Zusammenfassung**

Symmetrierungsschaltung zur Symmetrierung von in Reihe geschalteten Zwischenkreiskondensatoren, Verfahren zum Betrieb einer solchen Symmetrierungsschaltung und Zwischenkreisumrichter mit einer solchen Symmetrierungsschaltung

Die Erfindung betrifft eine Symmetrierungsschaltung (10) zur Symmetrierung von zumindest einem ersten und einem zweiten in Reihe geschalteten Zwischenkreiskondensator (12,14) und ein Verfahren zu deren Betrieb sowie eine Verwendung einer solchen Schaltung (10) für einen Zwischenkreisumrichter, wobei parallel zu dem ersten Zwischenkreiskondensator (12) und parallel zu dem zweiten Zwischenkreiskondensator (14) ein erstes bzw. ein zweites elektrisches Schaltelement (24,26) angeschlossen ist, wobei mit dem ersten und dem zweiten Schaltelement (24,26) ein Symmetrierungskondensator (30) wechselweise parallel zu dem ersten und zweiten Zwischenkreiskondensator (12,14) schaltbar ist.

## Beschreibung

Symmetrierungsschaltung zur Symmetrierung von in Reihe geschalteten Zwischenkreiskondensatoren, Verfahren zum Betrieb einer solchen Symmetrierungsschaltung und Zwischenkreisumrichter mit einer solchen Symmetrierungsschaltung

Die Erfindung betrifft eine Symmetrierungsschaltung zur Symmetrierung von in Reihe geschalteten Zwischenkreiskondensatoren sowie ein Verfahren zum Betrieb einer solchen Symmetrierungsschaltung und schließlich einen Zwischenkreisumrichter mit einer solchen Symmetrierungsschaltung. Die Symmetrierungsschaltung ist zur Symmetrierung von zumindest einem ersten und einem zweiten in Reihe geschalteten Zwischenkreiskondensator eines Zwischenkreisumrichters vorgesehen.

Eine mit der Symmetrierungsschaltung bewirkte Symmetrierung der zumindest zwei in Reihe geschalteten Zwischenkreiskondensatoren ist erforderlich, weil in der Antriebstechnik mit Umrichterzwischenkreisspannungen von 600 Volt und mehr üblicherweise jeweils zwei Zwischenkreiskondensatoren in Reihe geschaltet werden, um als Zwischenkreiskondensatoren Kondensatoren mit einer bestimmten Spannungsfestigkeit einsetzen zu können. Die so erreichte Symmetrierung vermeidet unzulässige Spannungen aufgrund von Ladungsverschiebungen an den Zwischenkreiskondensatoren. Ziel der Symmetrierung ist, jeweils die halbe Zwischenkreisspannung an jedem der Kondensatoren anliegen zu haben.

Bekannte Symmetrierungsschaltungen basieren auf in Reihe geschalteten Widerständen, wobei jeweils einer der beiden in Reihe geschalteten Widerstände parallel zu jeweils einem der mindestens zwei Zwischenkreiskondensatoren angeschlossen ist. Durch die im Folgenden als Symmetrierungswiderstände bezeichneten, parallel zu jeweils einem Zwischenkreiskondensator angeschlossenen Widerstände fließt beim Betrieb der Symmetrierungsschaltung ein Strom, was in nachteiliger Art und Weise zu einer dauernden Verlustleistung führt.

Eine Aufgabe der Erfindung besteht entsprechend darin, eine Symmetrierungsschaltung, ein Verfahren zum Betrieb einer solchen Symmetrierungsschaltung und einen Zwischenkreisumrichter mit einer solchen Symmetrierungsschaltung anzugeben, bei dem die oben skizzierten Nachteile vermieden, zumindest jedoch deren Auswirkungen reduziert sind. In einem speziellen Aspekt besteht eine Aufgabe der Erfindung darin, Verlustleistung, wie sie durch passive Symmetrierung mit Symmetrierungswiderständen entsteht, zu reduzieren.

Erfindungsgemäß wird hierbei durch eine aktive Beschaltung der Symmetrierungsschaltung eine Ladungsverschiebung durch Umladung erreicht. Eine solche aktive Symmetrierungsschaltung zur Symmetrierung von zumindest einem ersten und einem zweiten in Reihe geschalteten Zwischenkreiskondensator ist in Anspruch 1 definiert und zeichnet sich durch folgende Merkmale aus: Parallel zu dem ersten Zwischenkreiskondensator und parallel zu dem zweiten Zwischenkreiskondensator ist jeweils ein erstes und ein zweites elektrisches Schaltelement angeschlossen. Mit dem ersten und dem zweiten Schaltelement ist ein Symmetrierungskondensator wechselweise parallel zu dem ersten Zwischenkreiskondensator und dem zweiten Zwischenkreiskondensator schaltbar.

Der Vorteil der Erfindung besteht insbesondere darin, dass mit dem Symmetrierungskondensator als einem passiven, als Energiespeicher fungierenden Bauelement bei einer festgestellten Unsymmetrie der jeweiligen Spannungen über den zumindest zwei Zwischenkreiskondensatoren oder einer Unsymmetrie der jeweiligen Ladezustände im Gegensatz zur früher in Kauf genommenen Verlustleistung nur eine Ladungsverschiebung durch Umladung bewirkt wird und entsprechend Verlustleistung nicht mehr oder nur noch in vernachlässigbar geringem Umfang in Zusammenhang mit der Symmetrierung auftritt.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer besonderen Ausführungsform weist die Symmetrierungsschaltung einen Strombegrenzungswiderstand in Reihe mit dem Symmetrierungskondensator auf, um den Laststrom zu begrenzen.

In einer weiteren besonderen Ausführungsform weist die Symmetrierungsschaltung zumindest eine weitere Reihenschaltung von zwei weiteren Zwischenkreiskondensatoren auf, die im Folgenden zur Unterscheidung von dem ersten und dem zweiten Zwischenkreiskondensator auch als dritter und vierter Zwischenkreiskondensator bezeichnet werden. Der erste und der zweite weitere Zwischenkreiskondensator, also der dritte und der vierte Zwischenkreiskondensator, sind parallel zu dem ersten bzw. zweiten Zwischenkreiskondensator angeschlossen und die Reihenschaltung aus erstem und zweiten Zwischenkreiskondensator und die Reihenschaltung aus drittem und viertem Zwischenkreiskondensator ist über einen zwischen die beiden Mittelabgriffe zwischen erstem und zweitem Zwischenkreiskondensator bzw. drittem und viertem Zwischenkreiskondensator geschalteten Ausgleichswiderstand verbunden. Eine solche Symmetrierungsschaltung mit zumindest zwei Zweigen mit jeweils zwei in Reihe geschalteten Zwischenkreiskondensatoren wird im Folgenden auch als Symmetrierungsnetzwerk bezeichnet und ein solches Symmetrierungsnetzwerk erleichtert wegen der Möglichkeit der Verwendung einer Vielzahl von dann als Zwischenkreiskondensatoren fungierenden Kondensatoren das Erreichen der insgesamt erforderlichen Zwischenkreiskapazität.

In einer weiteren Ausführungsform der Symmetrierungsschaltung ist vorgesehen, dass das Symmetrierungsnetzwerk mindestens noch eine zusätzliche Reihenschaltung von zwei weiteren Zwischenkreiskondensatoren aufweist, die an das Symmetrierungsnetzwerk genauso angeschlossen ist wie die oben erwähnte weitere Reihenschaltung mit dem dritten und dem vierten Zwischenkreiskondensator. Auf diese Weise kann die Zwischenkreiskapazität durch sukzessive Hinzunahme zusätzlicher Reihenschaltungen von Zwischenkreiskondensatoren schrittweise erhöht werden, bis die erforderliche Zwischenkreiskapazität bei der gleichzeitigen Möglichkeit der Verwendung von einzelnen Zwischenkreiskondensatoren mit bestimmter Spannungsfestigkeit erreicht ist.

Die eingangs genannte Aufgabe wird auch mit einem Verfahren zum Betrieb der Symmetrierungsschaltung mit den Merkmalen in Anspruch 5 gelöst. Dazu ist bei einem Verfahren zum Betrieb der hier und im Folgenden beschrieben Symmetrierungsschaltung vorgesehen, dass die Schaltelemente mit einem vorgegebenen oder vorgebbaren symmetrischen Rechtecksignal beaufschlagt werden, um während einer ersten Hälfte der jeweiligen Periodendauer des Rechtecksignals den Symmetrierungskondensator parallel zu dem ersten Zwischenkreiskondensator und während einer zweiten Hälfte der jeweiligen Periodendauer des Rechtecksignals den Symmetrierungskondensator parallel zu dem zweiten Zwischenkreiskondensator zu schalten. Der Symmetrierungskondensator, der deutlich kleiner als die Zwischenkreiskondensatoren bemessen sein kann, wird also abwechselnd zu dem ersten oder dem oder jedem "oberen" Zwischenkreiskondensator und dem zweiten oder dem oder jedem "unteren" Zwischenkreiskondensator parallelgeschaltet. Durch dieses wechselweise Parallelschalten übernimmt der Symmetrierungskondensator bei Unsymmetrie im Zwischenkreis Ladung von demjenigen Zwischenkreiskondensator oder derjenigen Gruppe von Zwischenkreiskondensatoren, der bzw. die die größere Spannung führt und gibt sie während der unmittelbar folgenden Phase der Parallelschaltung zu dem komplementären Zwischenkreiskondensator oder der Gruppe komplementärer Zwischenkreiskondensatoren an diesen bzw. diese ab. Dadurch wird der oder jeder Zwischenkreiskondensator mit der größeren Spannung entladen und der oder jeder Zwischenkreiskondensator mit der kleineren Spannung geladen, so dass sich wieder eine Symmetrie einstellt.

Bei einer Ausführungsform des Verfahrens ist vorgesehen, dass die Schaltelemente mit einem vorgegebenen oder vorgebbaren, festen Rechtecksignal beaufschlagt werden, bis sich die Spannungen zwischen dem oder jedem "oberen" Zwischenkreiskondensator und dem oder jedem "unteren" Zwischenkreiskondensator symmetriert haben.

Bei einer zusätzlichen oder alternativen Ausführungsform des Verfahrens ist vorgesehen, dass die Schaltelemente nach einer anfänglichen Symmetrierung der Ladezustände oder Spannungen des ersten und zweiten Zwischenkreiskondensators bzw. der oberen und unteren Zwischenkreiskondensatoren mit einer im Vergleich zu dem Rechtecksignal bei der anfänglichen Symmetrierung geringeren Frequenz oder zu vorgegebenen oder vorgebbaren Zeitpunkten während vorgegebener oder vorgebbarer Zeitspannen mit der bei der anfänglichen Symmetrierung verwendeten Frequenz angesteuert werden. Dies trägt der Tatsache Rechnung, dass nach einer anfänglichen Symmetrierung eine weitere Symmetrierung im Wesentlichen nur noch notwendig ist, um eventuelle Verschiebeströme auszugleichen. Dies ist mit einer niederfrequenteren Ansteuerung oder einer Ansteuerung zu vorgegebenen oder vorgebbaren, insbesondere äquidistanten Zeitpunkten möglich.

Die Symmetrierungsschaltung und das Verfahren zu deren Betrieb wie hier und nachfolgend beschrieben eignet sich besonders für Zwischenkreisumrichter zur Verwendung in der Antriebstechnik, so dass die Erfindung auch solche Zwischenkreisumrichter mit einer solchen Symmetrierungsschaltung betrifft, wobei die von der Symmetrierungsschaltung umfassten Kondensatoren als Zwischenkreiskondensatoren des Zwischenkreisumrichters fungieren. Die Verwendung der Symmetrierungsschaltung und ihrer Ausgestaltungen kommt besonders für Zwischenkreisumrichter für Spannungen größer als 400 Volt in Betracht. Ein solcher Zwischenkreisumrichter weist Mittel zur Ausführung der hier und nachfolgend beschriebenen Verfahrensschritte auf, insbesondere eine erste und eine zweite Spannungsmessvorrichtung zur Messung der ersten und zweiten Mittenspannung oder zur Erfassung eines Maßes für die erste und zweite Mittenspannung sowie eine Regelungseinrichtung zur Generierung der dem jeweiligen Pulsmusters zugrunde liegenden Pulsfrequenz in Abhängigkeit von den beiden Mittenspannungen oder einer Differenz der beiden Mittenspannungen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine bekannte Symmetrierungsschaltung und
- FIG 2: eine Symmetrierungsschaltung nach dem Ansatz gemäß der Erfindung.

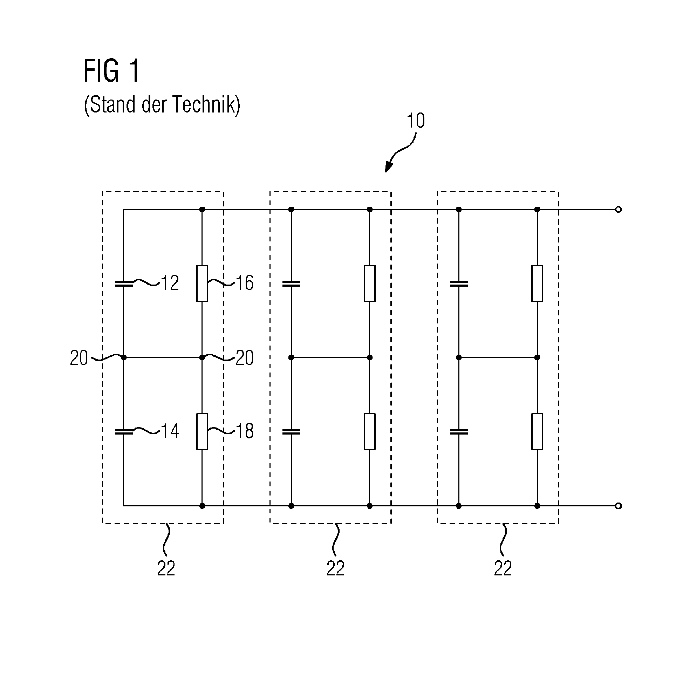

FIG 1 zeigt eine im Stand der Technik bekannte Symmetrierungsschaltung 10 zur Symmetrierung von zumindest einem ersten Zwischenkreiskondensator 12 und einem damit in Reihe geschalteten, zweiten Zwischenkreiskondensator 14.

Zur Symmetrierung der zumindest zwei von der Symmetrierungsschaltung 10 umfassten Zwischenkreiskondensatoren 12, 14 sind ein erster Widerstand 16 und ein damit in Reihe geschalteter zweiter Widerstand 18 vorgesehen. Jeder Widerstand 16, 18 ist dabei parallel zu einem der beiden Zwischenkreiskondensatoren 12, 14 angeschlossen. Zwischen den beiden Zwischenkreiskondensatoren 12, 14 und den beiden Widerständen 16, 18 befindet sich jeweils ein Mittelabgriff 20. Die Reihenschaltung der zumindest zwei Zwischenkreiskondensatoren 12, 14 und die damit parallele Reihenschaltung der beiden Widerstände 16, 18 kann insgesamt als Zweipol 22 aufgefasst werden und wie die Darstellung in FIG 1 zeigt, kann die Symmetrierungsschaltung 10 mehrere gleichartige Zweipole 22 der soeben beschriebenen Art umfassen, um die erforderliche Zwischenkreiskapazität zu erreichen. Die Zwischenkreiskapazität ergibt sich bei einer Symmetrierungsschaltung 10 durch die Parallelschaltung von drei Zwischenkreiskondensatorreihenschaltungen.

Bei den im Stand der Technik bekannten Symmetrierungsschaltungen 10 sind die Reihenschaltungen der davon umfassten Zwischenkreiskondensatoren 12, 14 jeweils einzeln symmetrisiert. Durch das sich insgesamt ergebende Symmetrierungswiderstandsnetzwerk fließt allerdings ein Strom, was zu einer dauernden Verlustleistung im Betrieb führt. Bei einer Verwendung der in FIG 1 gezeigten Symmetrierungsschaltung 10 als Zwischenkreisbeschaltung eines Zwischenkreisumrichters (nicht dargestellt; an sich bekannt) mit einem 18 A Leistungsteil mit 600 Volt Zwischenkreisspannung fließt durch das Symmetrierungswiderstandsnetzwerk z.B. ein Strom von 5 mA, was zu einer dauernden Verlustleistung von 3 Watt im Betrieb führt. In einem Dreischichtbetrieb ergibt sich daraus eine Verlustleistung von 26,28 kWh pro Jahr. Bei einer Installation von beispielsweise 100.000 Antriebsachsen mit jeweils einem Zwischenkreisumrichter und einer derartigen Symmetrierungsschaltung entsteht jährlich insgesamt eine Verlustenergie von 2.628 MWh allein durch die Symmetrierung.

Der hier vorgeschlagene Ansatz hat zum Ziel, die Verlustleistung, die durch eine passive Symmetrierung, wie in FIG 1 dargestellt, entsteht, zu reduzieren. Dies wird durch eine aktive Beschaltung und eine Ladungsverschiebung zur Umladung erreicht.

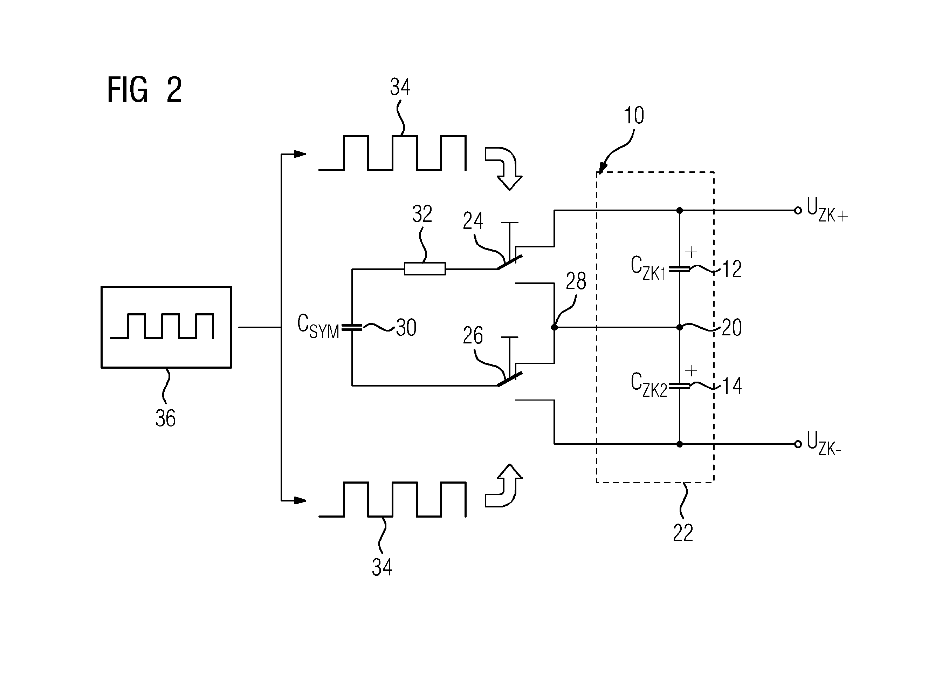

FIG 2 zeigt eine mögliche Ausführungsform einer Symmetrierungsschaltung 10 zur verlustarmen Symmetrierung der Zwischenkreiskondensatoren 12, 14. Diese umfasst in einer Reihenschaltung zumindest einen ersten Zwischenkreiskondensator 12 (C_ZK1) und einen zweiten Zwischenkreiskondensator 14 (C_ZK2). Über der Reihenschaltung der beiden Zwischenkreiskondensatoren 12, 14 liegt die Zwischenkreisspannung (U_ZK+, U_ZK-) an. Tatsächlich kann die dargestellte Symmetrierungsschaltung 10 noch weitere, jeweils paarweise in Reihe geschaltete Zwischenkreiskondensatoren, also zum Beispiel einen dritten und vierten Zwischenkreiskondensator oder einen dritten und vierten sowie einen fünften und sechsten Zwischenkreiskondensator umfassen, je nachdem wie viele Kondensatoren erforderlich sind, um die benötigte Zwischenkreiskapazität zu erreichen. Jeder der durch die Reihenschaltung der jeweils zwei Zwischenkreiskondensatoren 12, 14 gebildeten Zweipole 22 weist jeweils einen Mittelabgriff 20 auf. Bei einer Mehrzahl solcher Zweipole 22 sind diese untereinander an ihren Mittelabgriffen 20 durch Ausgleichswiderstände (nicht gezeigt) verbunden.

Der erste Zwischenkreiskondensator 12 wird entsprechend seiner Position im Ersatzschaltbild der Symmetrierungsschaltung 10 auch als "oberer" Zwischenkreiskondensator 12 bezeichnet. Bei einer Mehrzahl von Zweipolen 22 mit jeweils einer Reihenschaltung von jeweils zwei Zwischenkreiskondensatoren werden alle mit dem ersten Zwischenkreiskondensator 12 elektrisch parallel geschalteten Zwischenkreiskondensatoren als "obere" Zwischenkreiskondensatoren bezeichnet. Entsprechend werden der zweite Zwischenkreiskondensator 14 als "unterer" Zwischenkreiskondensator 14 und bei einer Mehrzahl von Zweipolen 22 alle mit dem zweiten Zwischenkreiskondensator 14 elektrisch parallel geschalteten Zwischenkreiskondensatoren als "untere" Zwischenkreiskondensatoren bezeichnet

Parallel zu dem ersten Zwischenkreiskondensator 12 und parallel zu dem zweiten Zwischenkreiskondensator 14 - oder parallel zu allen "oberen" Zwischenkreiskondensatoren 12 bzw. parallel zu allen "unteren" Zwischenkreiskondensatoren 14 - sind ein erstes bzw. ein zweites elektrisches Schaltelement 24, 26 angeschlossen. Die beiden Schaltelemente 24, 26 sind über einen Mittelabgriff 28 zusammengeschlossen und der Mittelabgriff 28 zwischen den Schaltelementen 24, 26 liegt auf gleichem Potential wie der Mittelabgriff 20 zwischen dem ersten und dem zweiten Zwischenkreiskondensator 12, 14.

Mit dem ersten und dem zweiten Schaltelement 24, 26 ist ein Symmetrierungskondensator 30 (C_SYM) wechselweise parallel zu dem ersten und zweiten Zwischenkreiskondensator 12, 14 schaltbar. In der in FIG 2 gezeigten Schaltstellung der beiden Schaltelemente 24, 26 ist der Symmetrierungskondensator 30 parallel zu dem ersten Zwischenkreiskondensator 12 oder jedem oberen Zwischenkreiskondensator geschaltet. In einer komplementären Schaltstellung beider Schaltelemente 24, 26 ist der Symmetrierungskondensator 30 parallel zu dem zweiten Zwischenkreiskondensator 14 oder jedem unteren Zwischenkreiskondensator geschaltet. Bei der in FIG 2 gezeigten Ausführungsform der Symmetrierungsschaltung 10 ist zur Begrenzung des Ladestroms in Reihe mit dem Symmetrierungskondensator 30 ein Strombegrenzungswiderstand 32 geschaltet.

Im Betrieb der Symmetrierungsschaltung 10 werden die beiden Schaltelemente 24, 26 gleichzeitig mit einem vorgegebenen oder vorgebbaren symmetrischen Rechtecksignal 34 beaufschlagt wie dies in FIG 2 durch die von der Darstellung des Rechtecksignals 34 ausgehenden Blockpfeile verdeutlicht werden soll. Die gleichzeitige Beaufschlagung der beiden Schaltelemente 24, 26 mit dem Rechtecksignal 34 lässt sich dadurch erreichen, dass beide Schaltelemente 24, 26 mit dem gleichen Rechtecksignal 34 beaufschlagt werden. Die gleichzeitige Beaufschlagung mit dem Rechtecksignal 34 bewirkt, dass während einer ersten Hälfte der jeweiligen Periodendauer des Rechtecksignals 34 der Symmetrierungskondensator 30 parallel zu dem ersten Zwischenkreiskondensator 12 oder jedem oberen Zwischenkreiskondensator und während einer zweiten Hälfte der jeweiligen Periodendauer des Rechtecksignals 34 der Symmetrierungskondensator 30 parallel zu dem zweiten Zwischenkreiskondensator 14 oder jedem unteren Zwischenkreiskondensator geschaltet ist.

Das Rechtecksignal 34 wird im Betrieb der Symmetrierungsschaltung 10 durch einen Signalgenerator 36 erzeugt und das erzeugte Rechtecksignal 34 wird beiden Schaltelementen 24, 26 zugeführt. Der Signalgenerator 36 ist ein Beispiel für ein Mittel zur Generierung eines symmetrischen Rechtecksignals 34 mit einer vorgegebenen oder vorgebbaren Periodendauer. Als Mittel zur Ansteuerung des ersten und zweiten Schaltelements 24, 26 in Abhängigkeit von dem Rechtecksignal 34 kommt in Betracht, das erste und zweite Schaltelement 24, 26 in Form jeweils eines Transistors auszuführen, denen das Rechtecksignal 34 direkt zum Schalten des jeweiligen Transistors zugeführt werden kann.

Beim Betrieb der Symmetrierungsschaltung 10 kommt in Betracht, die Schaltelemente 24, 26 nach einer anfänglichen Symmetrierung der Ladezustände des ersten und zweiten Zwischenkreiskondensators 12, 14 entweder mit einer im Vergleich zu dem Rechtecksignal 34 bei der anfänglichen Symmetrierung geringeren Frequenz oder zu vorgegebenen oder vorgebbaren Zeitpunkten während vorgegebener oder vorgebbarer Zeitspannen mit der bei der anfänglichen Symmetrierung verwendeten Frequenz anzusteuern.

Die Symmetrierungsschaltung 10 mit den davon umfassten Zwischenkreiskondensatoren 12, 14 ist speziell zur Verwendung in einem Zwischenkreisumrichter (nicht dargestellt, aber an sich bekannt) vorgesehen und von dem Zwischenkreisumrichter oder einer Zwischenkreisumrichterschaltung an der Stelle umfasst, an der in einem entsprechenden Ersatzschaltbild die Zwischenkreiskapazität dargestellt wird. Nach dem Hochladen eines Zwischenkreises des Zwischenkreisumrichters können sich aufgrund von Kondensatortoleranzen unsymmetrierte Spannungen an den Zwischenkreiskondensatoren ergeben. Um diese zu symmetrieren, kann die Symmetrierungsschaltung 10 mit fester Frequenz zugeschaltet werden, bis sich die Spannungen symmetriert haben. Danach ist eine Symmetrierung nur noch notwendig, um eventuell entstehende Verschiebeströme auszugleichen. Die Symmetrierungsschaltung 10 kann dann entweder niederfrequenter angesteuert werden oder in bestimmten Zeitabständen aktiviert werden, um entstandene Unsymmetrien wieder auszugleichen.

Einzelne im Vordergrund stehende Aspekte der hier eingereichten Beschreibung lassen sich damit kurz wie folgt zusammenfassen: Angegeben wird eine Symmetrierungsschaltung 10 zur Symmetrierung von zumindest einem ersten und einem zweiten in Reihe geschalteten Zwischenkreiskondensator 12, 14 und ein Verfahren zu deren Betrieb sowie eine Verwendung einer solchen Schaltung 10 für einen Zwischenkreisumrichter, wobei parallel zu dem ersten Zwischenkreiskondensator 12 und parallel zu dem zweiten Zwischenkreiskondensator 14 ein erstes bzw. ein zweites elektrisches Schaltelement 24, 26 angeschlossen ist, wobei mit dem ersten und dem zweiten Schaltelement 24, 26 ein Symmetrierungskondensator 30 wechselweise parallel zu dem ersten und zweiten Zwischenkreiskondensator 12,14 schaltbar ist.

Durch die oben beschriebene Vorgehensweise und die zugrunde liegende Symmetrierungsschaltung 10 wird eine verlustleistungsfreie Symmetrierung der Zwischenkreiskondensatoren 12,14 erreicht. Somit lassen sich energieeffizientere Leistungsteile zum Beispiel für Antriebsachsen und dergleichen realisieren. Eine Messung der Kondensatorspannungen, also der Spannungen über dem oder jedem oberen und unteren Zwischenkreiskondensator 12, 14, ist nicht notwendig. Der Ausgleich (Symmetrierung) ergibt durch die alternierende Ansteuerung der Schaltelemente 24, 26, so dass die Symmetrierungsschaltung 10 in einem Switch-Cap-Mode betrieben wird.

## Patentansprüche

1. Symmetrierungsschaltung zur Symmetrierung von zumindest einem ersten und einem zweiten in Reihe geschalteten Zwischenkreiskondensator (12,14),
wobei parallel zu dem ersten Zwischenkreiskondensator (12) und parallel zu dem zweiten Zwischenkreiskondensator (14) ein erstes bzw. ein zweites elektrisches Schaltelement (24,26) angeschlossen ist,
wobei mit dem ersten und dem zweiten Schaltelement (24,26) ein Symmetrierungskondensator (30) wechselweise parallel zu dem ersten und zweiten Zwischenkreiskondensator (12,14) schaltbar ist.

2. Symmetrierungsschaltung nach Anspruch 1, mit einem Strombegrenzungswiderstand (32) in Reihe mit dem Symmetrierungskondensator (30).

3. Symmetrierungsschaltung nach Anspruch 1 oder 2, mit zumindest einer weiteren Reihenschaltung von zwei weiteren Zwischenkreiskondensatoren, wobei der erste und der zweite weitere Zwischenkreiskondensator parallel zu dem ersten bzw. zweiten Zwischenkreiskondensator (12,14) angeschlossen ist und wobei die Reihenschaltung aus erstem und zweitem Zwischenkreiskondensator (12,14) und die Reihenschaltung aus erstem und zweitem weiteren Zwischenkreiskondensator über einen zwischen die beiden Mittelabgriffe (20) zwischen erstem und zweitem Zwischenkreiskondensator (12,14) bzw. erstem und zweitem weiteren Zwischenkreiskondensator geschalteten Ausgleichswiderstand verbunden sind.

4. Symmetrierungsschaltung mit mindestens einer genauso wie die weitere Reihenschaltung von zwei weiteren Zwischenkreiskondensatoren angeschlossenen zusätzlichen Reihenschaltung von zwei Zwischenkreiskondensatoren.

5. Verfahren zum Betrieb der Symmetrierungsschaltung nach einem der vorangehenden Ansprüche,
wobei die Schaltelemente (24,26) mit einem vorgegebenen oder vorgebbaren symmetrischen Rechtecksignal (34) beaufschlagt werden,
um während einer ersten Hälfte der jeweiligen Periodendauer des Rechtecksignals (34) den Symmetrierungskondensator (30) parallel zu dem ersten Zwischenkreiskondensator und
während einer zweiten Hälfte der jeweiligen Periodendauer des Rechtecksignals (34) den Symmetrierungskondensator (30) parallel zu dem zweiten Zwischenkreiskondensator zu schalten.

6. Verfahren nach Anspruch 5, wobei die Schaltelemente (24, 26) nach einer anfänglichen Symmetrierung der Ladezustände des ersten und zweiten Zwischenkreiskondensators (12,14) mit einer im Vergleich zu dem Rechtecksignal (34) bei der anfänglichen Symmetrierung geringeren Frequenz oder zu vorgegebenen oder vorgebbaren Zeitpunkten während vorgegebener oder vorgebbarer Zeitspannen mit der bei der anfänglichen Symmetrierung verwendeten Frequenz angesteuert werden.

7. Zwischenkreisumrichter zur Verwendung in der Antriebstechnik mit einer Symmetrierungsschaltung (10) nach einem der Ansprüche 1 bis 4, wobei die von der Symmetrierungsschaltung (10) umfassten Kondensatoren (12,14) als Zwischenkreiskondensatoren des Zwischenkreisumrichters fungieren.

8. Zwischenkreisumrichter nach Anspruch 7 für Spannungen größer als vierhundert Volt.

9. Zwischenkreisumrichter nach Anspruch 7 oder 8, mit Mitteln zur Ausführung der Verfahrensschritte gemäß Anspruch 5 oder 6.

10. Zwischenkreisumrichter nach Anspruch 9, mit zumindest einem Signalgenerator (36) zur Generierung eines symmetrischen Rechtecksignals (34) mit einer vorgegebenen oder vorgebbaren Periodendauer und Mitteln zur Ansteuerung des ersten und zweiten Schaltelements in Abhängigkeit von dem Rechtecksignal (34) .
